# EUROPEAN PATENT SPECIFICATION

(11) **EP 1 285 010 B1**
(45) Date of publication and mention of the grant of the patent: **26.07.2006**
(21) Application number: 01934126.2
(22) Date of filing: 17.05.2001
(51) Int. Cl.: C08F 10/02, C08F 4/24, C08F 2/34

(54) **PROCESS FOR THE GAS PHASE POLYMERISATION OF OLEFINS**
VERFAHREN ZUR GASPHASENPOLYMERISATION VON OLEFINEN
PROCEDE DE POLYMERISATION D'OLEFINES EN PHASE GAZEUSE

(30) Priority: 19.05.2000 EP 00430021
(43) Date of publication of application: 26.02.2003
(73) Proprietor: INNOVENE EUROPE LIMITED, Staines Middlesex, TW18 1DT (GB); BP CHEMICALS S.N.C., 95866 Cergy Pontoise Cedex (FR)
(72) Inventor: KUHLBERGER, Jean-Jacques, Mamansara Heights, Kuala Lumpur (MY); ROWLEY, Kenneth, John, Oswestry, Shropshire SY11 2YQ (GB)
(74) Representative: Preece, Michael
(86) International application number: PCT/GB2001/002202
(87) International publication number: WO 2001/087997

(56) References cited:
- EP-A- 0 174 507
- EP-A- 0 175 532
- EP-A- 0 475 603
- EP-A- 0 647 661
- WO-A-00/37556
- WO-A-01/21668
- WO-A-97/27225
- WO-A-99/12978

## Description

The present invention relates to a process for gas phase polymerisation of olefins with the aid of a supported chromium oxide based catalyst. The present invention also relates to a chromium high molecular weight polyethylene powder obtainable by the claimed gas phase polymerisation process. The present invention further relates to a chromium high molecular weight polyethylene pellet having improved properties.

Nowadays, the developments of new polymers showing improved product properties almost systematically requires the synthesis of new catalysis which are usually very expensive and very often relatively disappointing when used in industrial scale operations.

The development of the metallocene catalysis and its presence in the literature compared to its real industrial development is just an example thereof.

In the course of their product developments, the applicants have unexpectedly found that it is now possible to produce a very valuable high molecular weight polyethylene powder by using a low cost conventional chromium oxide supported catalyst in gas phase polymerisation. Furthermore, the Applicants have found that this powder could be advantageously processed into chromium high molecular weight polyethylene pellet having improved properties, said pellet being particularly suitable for blow moulding applications like drums of capacity higher than 200 litres up to intermediate bulk containers of more several cubic meters.

The present invention consists of a gas phase polymerisation process which makes it possible to manufacture high molecular weight polymers having superior properties and microstructure characteristics that make them processable into high molecular weight pellets particularly suitable for blow moulding applications like drums of capacity higher than 200 litres up to intermediate bulk containers of more several cubic meters.

In particular, the chromium high molecular weight polyethylene pellet according to the present invention have a combination of the following characteristics : weight average molecular weight (Mw) comprised between 250000 and 2000000, high load melt index comprised between 1 to 3 g per 10 minutes, and density comprised between 950 and 958 kg per cubic meter.

The unexpected surprise of the characteristics of these pellets further lies in the fact that the major properties of the chromium high molecular weight polyethylene powder could be retained after extrusion into pellet extremely close to their original values.

The weight average molecular weight (hereinafter referred as to Mw) of the chromium high molecular weight polyethylene pellet according to the present invention is comprised between 250000 and 2000000, preferably between 300000 and 1800000, more preferably between 350000 and 800000.

Preferably, the Mw of the chromium high molecular weight polyethylene powder according to the present invention is comprised between 250000 and 2000000, preferably between 300000 and 1800000, more preferably between 350000 and 800000. Said Mw is measured according to conventional gel permeation chromatography techniques using appropriate columns, e.g. Shodex ® (trademark of Showa Denko) GPC AT-806S columns.

As indicated above, an unexpected embodiment according to the present invention is that the ratio between the Mw of the powder (Mw powder) to the Mw of its corresponding pellet (Mw pellet) is preferably comprised between 1.0 and 1.3 , more preferably 1.05 to 1.2.

The high load melt index (hereinafter referred as to HLMI and performed with a weight of 21.6kg) of the chromium high molecular weight polyethylene pellet according to the present invention is comprised between 1 to 3 g per 10 minutes, preferably between 1.3 to 2.8 g per 10 minutes, more preferably between 1.9 to 2.2.

Preferably, the HLMI of the chromium high molecular weight polyethylene powder according to the present invention is comprised between 1.2 and 3.1 , preferably 1.4 and 2.9, more preferably 2 to 2.3.

Said HLMI is measured according to ISO 1133-1997 : condition G. An unexpected embodiment according to the present invention is that the ratio between the HLMI of the powder (HLMI powder) to the HLMI of its corresponding pellet (HLMI pellet) is preferably comprised between 1 and 1.3, more preferably 1.01 to 1.15.

The density (hereinafter referred as to d) of the chromium high molecular weight polyethylene pellet according to the present invention is comprised between 950 and 958 kg per cubic meter.

Preferably, the d of the chromium high molecular weight polyethylene powder according to the present invention is also comprised between 950 and 958

Said d is measured according to ISO1872/1-1993

Preferably, the chromium high molecular weight polyethylene pellets according to the present invention are characterised by an impact strength (Charpy test / -20°C /according to ISO 179-1982) greater than 23 kJ/m2 .

Preferably, the chromium high molecular weight polyethylene pellets according to the present invention are characterised by a bottle stress crack resistance (according to ASTM D 1693-97a) greater than 50 h.

The high molecular weight polyethylene powder according to the present invention can thus be prepared by using a low cost conventional chromium oxide supported catalyst in gas phase polymerisation conditions.

According to the present invention, the supported chromium oxide based catalyst preferably contains from 0.1 to 3 % of chromium. According to a preferred embodiment of the present invention, the catalyst is advantageously a titanium or aluminium modified supported chromium oxide based catalyst, most preferably an aluminium modified supported chromium oxide based catalyst. For example, the catalyst can be modified with from 0.1 to 8 % by weight titanium or 0.1 to 6% by weight of aluminium.

The catalyst support is preferably a granular or microspherical refractory oxide such as silica, alumina, zirconium oxide or a mixture or a coprecipitate of these oxides. The support can be obtained by various known processes, especially by precipitation of silicon compounds such as, for example, silica, from a solution of an alkali metal silicate, (or else by coprecipitation of a refractory oxide gel or hydrogel from solutions containing at least two compounds chosen from silicon, titanium, zirconium or aluminium compounds).

The granular support advantageously has a specific (BET) surface of between 200 and 1200 m²/g, a pore volume ranging from 1 to 3.5 ml/g, and can consist of particles which have a diameter of between 20 and 250 µm, preferably between 30 and 150 µm. It advantageously contains hydroxyl functional groups and is preferably free from water at the time of its use during the preparation of the catalyst. For this purpose it can be heated to a temperature ranging e.g. from 100 to 200°C.

The catalyst is preferably prepared by a process comprising a first stage during which the support is impregnated with a chromium compound, and a second optional and preferred stage during which the product originating from the first stage is impregnated with either a titanium or an aluminium compound. The chromium compound employed can be a chromium oxide, generally of formula CrO₃, or a chromium compound which can be converted into chromium oxide by calcining, such as, for example, a chromium nitrate or sulfate, an ammonium chromate, a chromium carbonate, acetate or acetylacetonate or else a *tert*butyl chromate.

Titanium compounds which can advantageously be employed are titanium alcoholate such as, for example, titanium tetraethylate, titanium tetraisopropylate or titanium tetra-butylate.

Aluminium compounds which can advantageously be employed are for example of the aluminium acetate, acetylacetonate, alkoxy, or alkyl types.

The impregnation of the support with the titanium or the aluminium compound can be performed advantageously just before or during the calcination/activation procedure applied to the catalyst.

The catalyst can also be prepared by a process which consists of a coprecipitation of a gel or hydrogel such as that referred to above in the presence of a chromium compound and of a titanium compound, so that a cogel is formed comprising, on the one hand, at least one refractory oxide such as silica or alumina, and, on the other hand, a chromium compound and a titanium compound.

Before it is employed, the supported catalyst must also be subjected to at least one calcination/activation step which consists in a thermal treatment performed at a temperature of at least 200°C and at most equal to the temperature at which the granular support begins to sinter ; it is preferably performed at a temperature ranging from 200 to 1200°C, preferably between 200 and 700°C. The thermal treatment is performed in an non-reducing atmosphere, preferably in an oxidising atmosphere, generally formed by a gaseous mixture comprising oxygen, such as, for example, air. For example, it can be carried out in a fluidised bed activator. The thermal treatment can last for between 5 minutes and 24 hours, preferably between 30 minutes and 15 hours, so that on completion of the treatment the chromium compound is at least partially in the hexavalent state. The content by weight of chromium in the catalyst obtained is generally between 0.05 and 30%, and preferably between 0.1 and 3%.

The catalyst obtained can be directly injected into the gas phase polymerisation reactor. According to the present invention, the supported chromium oxide based catalyst is preferably subjected to a prepolymerisation stage before introduction into the reactor. This stage consists of bringing the catalyst into contact, for example, with ethylene , alone or mixed with at least one other alpha-olefin preferably containing 3 to 12 carbon atoms. Preferably propylene, 1-butene, 1-hexene, 4-methyl-1-pentene or 1-octene can be used as an alpha-olefin mixed with ethylene. Prepolymerisation can be performed either in suspension in a liquid hydrocarbon medium, or in the gaseous phase, in a reactor having a fluidised bed and/or a mechanical stirring system, at a temperature lower than that at which the prepolymer particles begin to soften and form agglomerates, preferably a temperature between 40 and 115°C. Optionally, the prepolymerisation stage can be performed in the presence of hydrogen. Prepolymerisation is preferably performed until the prepolymer contains 4.10⁻⁵ to 3, preferably 10⁻³ to 10⁻¹ milligram-atoms of chromium per gram of prepolymer. According to a preferred embodiment of the present invention, this prepolymerisation stage is performed in the absence of organometallic compounds of metal of groups 1, 2 ,12 and 13 of the periodic table of the elements according to its new notation.

The resulting prepolymer advantageously takes the form of a powder formed by particles having a mean diameter by mass of between 40 and 3000 microns, preferably between 100 and 1000 microns, and more particularly still between 125 and 250 microns.

According to the present invention, the gas phase polymerisation of the alpha-olefin can be carried out in a fluidised and/or mechanically stirred bed reactor, according to any known methods. The polymerisation reaction can be carried out at a temperature of between 0 to 120°C, preferably between 50 to 110°C, and at a total pressure ranging from 0.1 to 5 MPa. The process of the present invention has proven to be very efficient in high throughput plants, e.g. reactors producing more than 180 thousand tons of polyethylene per year.

The process according to the invention is particularly suitable for the manufacture of ethylene polymers such as, for example, ethylene homopolymers or ethylene copolymers containing at least one alpha-olefin containing from 3 to 12 carbon atoms such as, for example, 1-butene, 1-hexene or 1-octene. In general, the ethylene copolymers prepared by the process according to the invention contain, in addition to ethylene, less than 10 % and in most cases less than 4 % and preferably less than 1 % by weight of another alpha-olefin containing from 3 to 12 carbon atoms.

The chromium high molecular weight polyethylene powder so obtained could thus be advantageously processed into chromium high molecular weight polyethylene pellet having improved properties, said pellet being particularly suitable for blow moulding applications like drums of capacity higher than 200 litres up to intermediate bulk containers of more several cubic meters.

Said processing is preferably performed under conventional conditions, e.g. by using blow moulding machines equipped with accumulation heads.

The processing temperature is comprised between 170 and 230°C , preferably between 190 and 210°C.

The following examples illustrate the present invention.

### Examples

### a) Catalyst preparation

The catalyst is a silica supported chromium oxide based granular catalyst composition sold under the registered trade mark C-24340 by PQ Corporation (Valley Forge, Pennsylvania, USA) which contains chromium in the form of a chromium (III) salt and aluminium.

It is subjected in a reactor to a heat treatment at 500°C under fluidisation conditions with dry air stream.

Next the fluidisation by dry air is changed to fluidisation by dry nitrogen and the catalyst is cooled to room temperature and stored under dry nitrogen. The resulting active catalyst (with its chromium being at a +6 valence state) contains 1% by weight of chromium and 1.6% by weight of aluminium.

The characteristics of this catalyst are : surface area = 387 m2/g, pore volume = 2.1 ml/g, median particle size = 88 µm.

### b) Prepolymer preparation

An operation of ethylene prepolymerisation is carried out in a reactor at a temperature of 71-75°C in n-hexane as diluent in the presence of the catalyst described above (a).

The ethylene prepolymer consists of about 32.5 kg PE / mol Cr. This prepolymerisation stage is performed in the absence of any organometallic cocatalyst compound.

### c) Polymerisation

The polymerisation is carried out in a typical industrial fluidised bed reactor using the prepolymer described above (b).
All the conditions are indicated in Table 1.

The recovered polymer powder shows properties as indicated in Table 2.

**Table 1 Average Operating Conditions**

| | | |
|---|---|---|
| Temperature | 95.4 | °C |
| Total Pressure | 19.3 | bar g |
| Ethylene Pressure | 7 | bar |
| Hydrogen Pressure | 3 | bar |
| Cocatalyst (TEA) | 0 | mol/ton |
| Vf | 61.5 | cm/s |
| Residence time | 5.9 | h |
| Production rate | 12.5 | ton/h |
| STY max | 62 | kg/hm3 |
| Bed height | 13.2 | m |

| **Average Steady State Conditions** | | |
|---|---|---|
| Average Poly rate | 2241 | g/mMolh |
| Max Poly rate | 2864 | g/mMolh |
| Average activity | 325 | g/mMolhb |

**Table 2 Powder Properties**

| | | |
|---|---|---|
| Melt Index (HLMI) | 2.60 | g/10min |
| density (d) | 954 | kg/m3 |
| powder bulk density | 334 | kg/m3 |
| fluidised bulk density | 285 | kg/m3 |
| withdrawal bulk density | 160 | kg/m3 |

### d) Additives and pelletising unit

The withdrawn polyethylene powder is then extruded into pellets under the following conditions :
High Energy Screw,
Mixer Motor set at Low Speed,
Barrel temperature set at 250°C ,
Hot oil temperature set at 275°C , and
inert atmosphere (no oxygen injected into the barrel).

The following additive package is admixed with the polyethylene powder in the extruder

| **Type** | **Content** | **Units** |
|---|---|---|
| Irgafos-168 | 1800 | ppm |
| Irgafos PEPQ-FF | 200 | ppm |
| Irganox 1076-FF | 700 | ppm |

The measured pellet properties are given in Table 3

**Table 3 Pellet properties**

| | |
|---|---|
| HLMI (21.6 kg) | 2.58 g/10 min |
| density | 955.9 kg/m3 |
| Whiteness index | 74.6 |

| Impact and stress crack performance | |
|---|---|
| Charpy impact | 23.9 (-20C) kj/m2) |
| Bottle stress crack resisitance | 57 (60 C) Hrs |

| Bekum processing for BSCR tests | |
|---|---|
| Melt temperature | 219 C |
| Melt pressure | 145 (bars) |

## Claims

1. Chromium high molecular weight polyethylene pellet having a weight average molecular weight (Mw) comprised between 250000 and 2000000, a high load melt index comprised between 1 to 3 g per 10 minutes, and a density comprised between 950 and 958 kg per cubic meter.

2. Chromium high molecular weight polyethylene pellet according to claim 1 **characterised by** an impact strength greater than 23 kJ/m2 .

3. Chromium high molecular weight polyethylene pellet according to any of the preceding claims **characterised by** a bottle stress crack resistance greater than 50 h.

4. Chromium high molecular weight polyethylene pellet according to any of the preceding claims **characterised in that** it is produced by an ethylene gas phase polymerisation process.

5. Chromium high molecular weight polyethylene pellet according to any of the preceding claims **characterised in that** the ethylene polymerisation process has an average throughput of at least 180 thousand tons of polyethylene per year.

6. Chromium high molecular weight polyethylene pellet according to any of the preceding claims **characterised in that** it does not comprise any boron containing compound.

## Patentansprüche

1. Chrom-Polyethylen-Pellet mit hohem Molekulargewicht, das ein gewichtsmittleres Molekulargewicht (Mw) zwischen 250.000 und 2.000.000, einen Schmelzindex bei hoher Last zwischen 1 und 3 g pro 10 Minuten und eine Dichte zwischen 950 und 958 kg pro Kubikmeter aufweist.

2. Chrom-Polyethylen-Pellet mit hohem Molekulargewicht nach Anspruch 1, das durch eine Schlagfestigkeit von mehr als 23 kJ/m² **gekennzeichnet** ist.

3. Chrom-Polyethylen-Pellet mit hohem Molekulargewicht nach einem der vorhergehenden Ansprüche, das durch eine Flaschenspannungsrißbeständigkeit von mehr als 50 h **gekennzeichnet** ist.

4. Chrom-Polyethylen-Pellet mit hohem Molekulargewicht nach einem der vorhergehenden Ansprüche, **dadurch gekennzeichnet, daß** es durch ein Ethylengasphasenpolymerisationsverfahren hergestellt ist.

5. Chrom-Polyethylen-Pellet mit hohem Molekulargewicht nach einem der vorhergehenden Ansprüche, **dadurch gekennzeichnet, daß** das Ethylenpolymerisationsverfahren einen durchschnittlichen Durchsatz von mindestens 180.000 Tonnen Polyethylen pro Jahr aufweist.

6. Chrom-Polyethylen-Pellet mit hohem Molekulargewicht nach einem der vorhergehenden Ansprüche, **dadurch gekennzeichnet, daß** es keine Bor-enthaltende Verbindung umfaßt.

## Revendications

1. Pastille de polyéthylène de masse moléculaire élevée à base de chrome ayant une masse moléculaire moyenne en poids (Mw) comprise entre 250 000 et 2 000 000, un indice de fluidité de charge élevée compris entre 1 et 3 g par période de 10 minutes, et une masse volumique comprise entre 950 et 958 kg par mètre cube.

2. Pastille de polyéthylène de masse moléculaire élevée à base de chrome selon la revendication 1, **caractérisée par** une résistance aux chocs supérieure à 23 3 kJ/m² .

3. Pastille de polyéthylène de masse moléculaire élevée à base de chrome selon l'une quelconque des revendications précédentes, **caractérisée par** une résistance à la fissuration sous contrainte d'une bouteille supérieure à 50 h.

4. Pastille de polyéthylène de masse moléculaire élevée à base de chrome selon l'une quelconque des revendications précédentes, **caractérisée en ce qu'**elle est produite au moyen d'un procédé de polymérisation d'éthylène en phase gazeuse.

5. Pastille de polyéthylène de masse moléculaire élevée à base de chrome selon l'une quelconque des revendications précédentes, **caractérisée en ce que** le procédé de polymérisation d'éthylène a une capacité de production moyenne d'au moins 180 000 tonnes de polyéthylène par an.

6. Pastille de polyéthylène de masse moléculaire élevée à base de chrome selon l'une quelconque des revendications précédentes, **caractérisée en ce qu'**elle ne comprend aucun composé contenant du bore.
